# EUROPEAN PATENT APPLICATION

(11) **EP 4 060 942 A1**
(43) Date of publication of application: **21.09.2022**
(21) Application number: 20894652.5
(22) Date of filing: 24.11.2020
(51) Int. Cl.: H04L 12/24

(54) **CONFIGURATION ANOMALY DETECTION METHOD, SERVER AND STORAGE MEDIUM**

(30) Priority: 26.11.2019 CN 201911173548
(71) Applicant: ZTE Corporation, Shenzhen, Guangdong 518057 (CN)
(72) Inventor: TANG, Chun, Shenzhen, Guangdong 518057 (CN); YANG, Jun, Shenzhen, Guangdong 518057 (CN); LI, Haibin, Shenzhen, Guangdong 518057 (CN); PENG, Xin, Shenzhen, Guangdong 518057 (CN); BO, Kaitao, Shenzhen, Guangdong 518057 (CN)
(74) Representative: Raynor, Simon Mark
(86) International application number: PCT/CN2020/131182
(87) International publication number: WO 2021/104270

(57) **Abstract**

The embodiments of the present disclosure relate to the field of communications, and disclose a method for detecting configuration anomaly, a server and a storage medium. The method for detecting configuration anomaly includes: acquiring a configuration file of network equipment to be detected, identifying a plurality of data items belonging to at least one preset type from the configuration file, performing association analysis on data items belonging to a same preset type to obtain association analysis data, and obtaining a detection result of configuration anomaly according to the association analysis data and a preset anomaly condition.

## Description

### CROSS REFERENCE TO RELATED APPLICATIONS

This application claims priority to Chinese Patent Application No. 201911173548.5 filed on November 26, 2019, which is incorporated herein by reference in its entirety.

### TECHNICAL FIELD

Embodiments of the present disclosure relate to the field of communications technology and in particular to a method for detecting configuration anomaly, a server and a storage medium.

### BACKGROUND

During a process of putting network equipment into use and establishing services, there is usually a need to issue various configuration commands to the equipment, to perform some basic configurations, port configurations, protocol configurations and various types of service configurations. Some of these configurations need to be performed manually. Therefore, during an equipment configuration process, it is possible to occur configuration errors due to various reasons such as skill level of service personnel, operation compliance and the like. Although the network equipment is provided with a certain configuration detection mechanism to detect some obvious erroneous configurations, there are still some erroneous configurations which are not detected and thus issued to the equipment. The configuration errors in the equipment may bring impacts to service quality and user experiences, and interrupt services in some specific cases, and even may threat the stable operation of a network. Therefore, it is necessary to search for configuration errors by other means and make timely correction to eliminate potential risks.

At present, the common configuration detection approach is a manual patrol inspection system. Due to various types of the equipment, a large number of the equipment, and various customer services, it usually takes several weeks to complete configuration detection for the network equipment within a particular region in a case of using the existing manual patrol inspection system. That is to say, the manual patrol inspection system is low in detection efficiency and will consume a large amount of labor and time costs.

### SUMMARY

Embodiments of the present disclosure provide a method for detecting configuration anomaly, a server and a storage medium.

Some embodiments of the present disclosure provide a method for detecting configuration anomaly, including: acquiring a configuration file of network equipment to be detected; identifying a plurality of data items belonging to at least one preset type from the configuration file; performing association analysis on data items belonging to a same preset type to obtain association analysis data; and obtaining a detection result of configuration anomaly according to the association analysis data and a preset anomaly condition.

Some embodiments of the present disclosure further provide a server, including at least one processor and a memory in communication connection with the at least one processor, where the memory stores instructions executable by the at least one processor, when the instructions are executed by the at least one processor, the at least one processor implements the above method for detecting configuration anomaly.

Some embodiments of the present disclosure further provide a computer readable storage medium, storing computer programs, when the computer programs are executed by a processor, the processor implements the above method for detecting configuration anomaly.

### BRIEF DESCRIPTION OF THE DRAWINGS

One or more embodiments of the present disclosure are illustrated in combination with corresponding drawings and the illustrative descriptions will not constitute limitation to the embodiments of the present disclosure.
FIG. 1 is a schematic diagram illustrating a relationship between configuration anomaly detection apparatus and a carrier network according to a first embodiment of the present disclosure.
FIG. 2 is a schematic diagram illustrating another relationship between the configuration anomaly detection apparatus and the carrier network according to the first embodiment of the present disclosure.
FIG. 3 is a flowchart illustrating a method for detecting configuration anomaly according to the first embodiment of the present disclosure.
FIG. 4 is a structural schematic diagram illustrating a hierarchical model according to the first embodiment of the present disclosure.
FIG. 5 is a schematic diagram illustrating a format of a configuration text according to the first embodiment of the present disclosure.
FIG. 6 is a schematic diagram illustrating a mapping example of a configuration command according to the first embodiment of the present disclosure.
FIG. 7 is a flowchart illustrating another method for detecting configuration anomaly according to the first embodiment of the present disclosure.
FIG. 8 is a structural schematic diagram illustrating the configuration anomaly detection apparatus according to the first embodiment of the present disclosure.
FIG. 9 is a flowchart illustrating a method for detecting configuration anomaly according to a second embodiment of the present disclosure.
FIG. 10 is a flowchart illustrating a method for detecting configuration anomaly according to a third embodiment of the present disclosure.
FIG. 11 is a structural schematic diagram illustrating a server according to a fourth embodiment of the present disclosure.

### DETAILED DESCRIPTION OF THE EMBODIMENTS

In order to make the objects, technical solutions and advantages of the embodiments of the present disclosure clearer, detailed descriptions will be made to the embodiments of the present disclosure in combination with the accompanying drawings. However, persons of ordinary skill in the art may understand that, in the embodiments of the present disclosure, many technical details are proposed to help readers to understand the present disclosure better. The technical solutions claimed by the present disclosure can be still achieved based on various changes and modifications of the following embodiments without these technical details. The division of the following embodiments is made for convenience of descriptions and shall not constitute any limitation to specific embodiments of the present disclosure, and various embodiments can be combined or referred to each other in case of no contradiction.

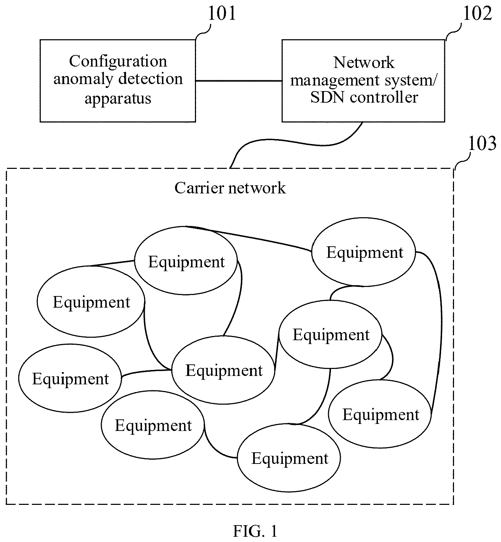

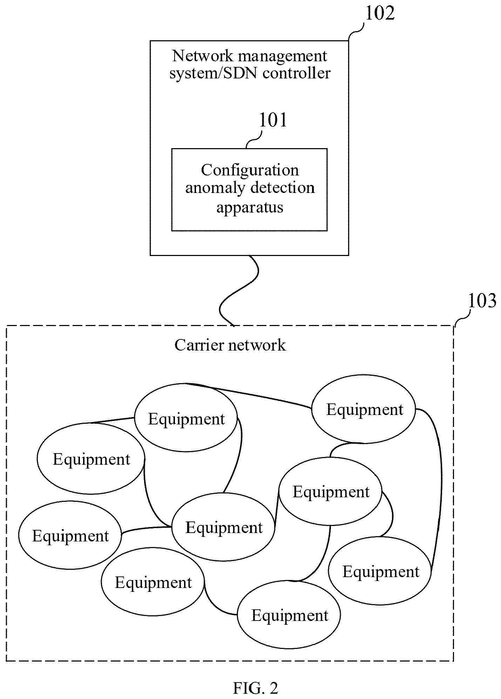

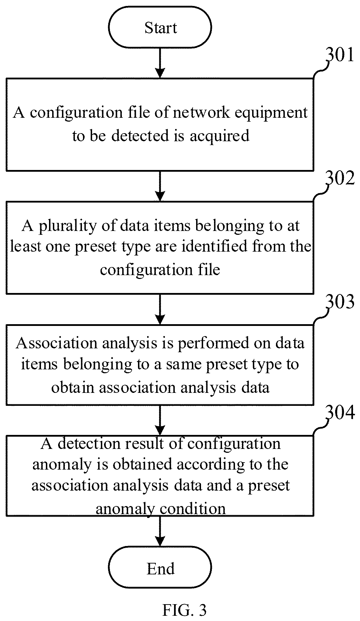

A first embodiment of the present disclosure relates to a method for detecting configuration anomaly. The method is applied on configuration anomaly detection apparatus, such that the configuration anomaly detection apparatus can quickly detect configuration anomalies of network equipment based on association analysis. In practice, as shown in FIGS 1 and 2, there is a plurality of equipment which are called network equipment in a carrier network 103. Configuration anomaly detection apparatus 101 may be deployed independent of a network management system or software defined network (SDN) controller 102 or may be deployed as a part thereof. The implementation details of the method for detecting configuration anomaly according to this embodiment will be specifically described below. The implementation details provided for easy understanding only are not necessarily required for implementation of the solution. The specific flow is as shown in FIG. 3 and includes the following operations.

At operation 301, a configuration file of network equipment to be detected is acquired.

In a specific example, it is assumed that there is a network system including one or more pieces of network equipment, and a network management system or a SDN controller as well as the above configuration anomaly detection apparatus. Before the configuration file of the network equipment to be detected is acquired, a trigger mechanism for anomaly detection of the network equipment in the current network system may be deployed in the current network system. For example, the trigger mechanism for anomaly detection of the network equipment in the current network system is deployed in the configuration anomaly detection apparatus in the network system. The trigger mechanism for anomaly detection of the network equipment may include a specific time, a specific message and a specific operation and the like, which is not limited herein. In addition to deploying the trigger mechanism for anomaly detection of the network equipment, settings such as detection range, anomaly index threshold and the like relating to anomaly detection of the network equipment may also be deployed in the current network system. After the mechanism for configuration anomaly detection is triggered, the configuration anomaly detection apparatus sends a request for detecting a configuration anomaly of network equipment to the network management system or the SDN controller and acquires configuration data of the network equipment through the network management system or the SDN controller, or the configuration anomaly detection apparatus directly sends a configuration data acquiring request to the network equipment and receives configuration data of text form returned by the network equipment. For example, the configuration anomaly detection apparatus sends a request for detecting a configuration anomaly of network equipment to the network management system or the SDN controller, and the network management system or the SDN controller receives the request from the configuration anomaly detection apparatus and issues a configuration data acquiring request to the network equipment under its control and receives configuration data of text form returned by the network equipment. It is noted that the configuration data returned in the form of text helps the configuration anomaly detection apparatus to process the configuration data of the network equipment, which is not limited herein in practical applications. In addition, after receiving the configuration data in the form of text returned by the network equipment under its control, the network management system or the SDN controller may send the configuration data to the configuration anomaly detection apparatus, such that the configuration anomaly detection apparatus can obtain a configuration file containing the configuration data of each piece of network equipment in the network system. The configuration file may satisfy a given format requirement, for example, at most one configuration command being present in each line in the configuration file; a main-secondary relationship between a main command and a secondary command being marked by a fixed indentation width or other identifiable identifier, and the main and secondary commands appearing continuously in the text; or configuration commands corresponding to a particular configuration scenario appearing continuously in the text and this configuration scenario being separated from other configuration scenarios by blank line or other identifiable identifier or the like, which is not limited herein.

At operation 302, a plurality of data items belonging to at least one preset type are identified from the configuration file.

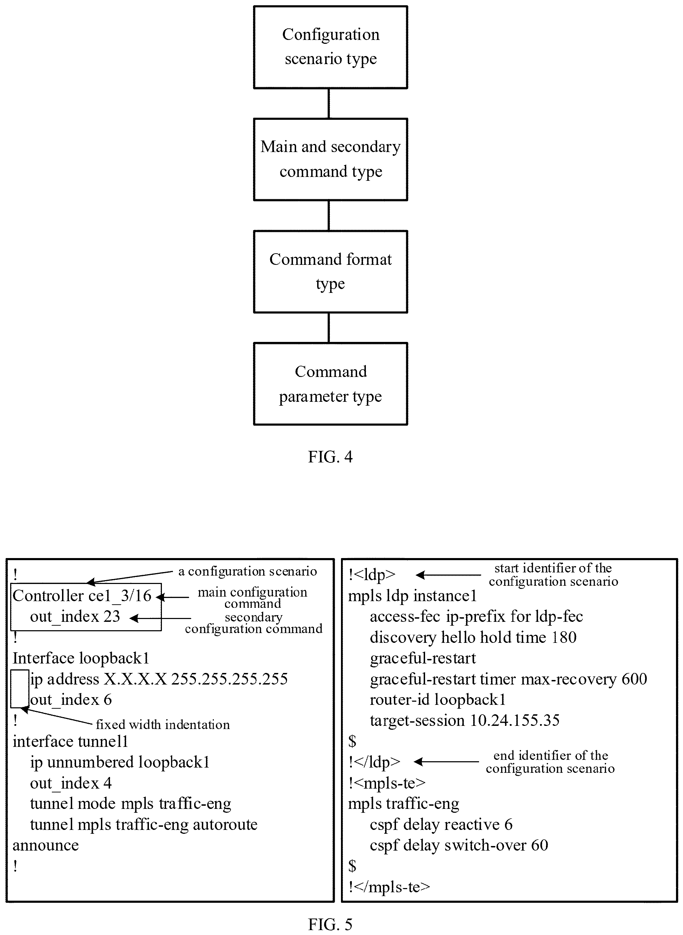

In a specific example, identifying the plurality of data items belonging to the at least one preset type from the configuration file includes analyzing the configuration file based on a hierarchical model and identifying the plurality of data items belonging to the at least one preset type. The hierarchical model is a model determined based on an equipment configuration rule and used to describe organizational form of the data items in the configuration file. In this embodiment, the plurality of preset types include the following types: a configuration scenario type, a main and secondary command type, a command format type, and a command parameter type. As shown in FIG. 4, the hierarchical model sequentially involves, from top layer to bottom layer, the configuration scenario type, the main and secondary command type, the command format type and the command parameter type. Herein, the configuration scenario type and the main and secondary command type are taken as an example. For example, the configuration anomaly detection apparatus analyzes the configuration file based on the hierarchical model and obtains a plurality of data items of the configuration scenario type, and analyzes each data item of the configuration scenario type to obtain the data items of the main and secondary command type. That is to say, the data items of the configuration scenario type also include the data items of the main and secondary command type, namely, there is a hierarchical relationship between data items of the configuration scenario type and those of the main and secondary command type herein. If the data of the configuration scenario type is regarded as top-layer data, the data of the main and secondary command type, as lower-layer data, can be regarded as that obtained from the top-layer data. In this way, it is not necessary for the configuration anomaly detection apparatus to perform multiple analyses on the configuration file for respective classification of each preset type, thereby the work load of the configuration anomaly detection apparatus can be reduced and the efficiency of configuration anomaly detection can be improved. Furthermore, the preset type is not limited to the configuration scenario type, the main and secondary command type, the command format type, and the command parameter type. After the analysis based on the hierarchical model, hierarchical classification data can be constructed more accurately and the data items of all preset types can be obtained. Furthermore, this embodiment can implement configuration anomaly detection at different hierarchies and configuration anomaly detection can be performed based on the data items of all preset types. In this way, configuration problems of different types can be detected, thereby the configuration anomaly detection can be more comprehensive.

Specifically, a data item of the configuration scenario type includes at least one data item of the main and secondary command type, and a data item of the main and secondary command type includes at least one data item of the command format type. When a data item of the configuration scenario type is identified, data items of the command format type included in data items of the configuration scenario type are replaced, according to a correspondence between a preset command format and characters, with characters corresponding to the data items of the command format type, where a data item of the command format type is a command format. When a data item of the main and secondary command type are identified, data items of the command format type included in data items of the main and secondary command type are replaced, according to a correspondence between a preset command format and characters, with characters corresponding to the data items of the command format type.

In a specific example, it is assumed that the configuration anomaly detection apparatus performs configuration scenario classification on the configuration files based on configuration grammar rule and text format and finally obtains a scenario classification dataset C₁. A configuration scenario is generally composed of multiple lines of configuration commands appearing continuously in a configuration text. A configuration scenario and another configuration scenario are generally separated by a blank line or a specific identifier. The configuration commands in a configuration scenario may be displayed as different indentation width, so as to represent that there is a main-secondary command relationship between adjacent commands. The secondary command assists the main command to implement a specific configuration function. As shown in FIG. 5, two configuration text formats are displayed. As shown by the text in right part of FIG. 5, !<ldp> is a start identifier of a configuration scenario, and !</ldp> is an end identifier of this configuration scenario. The multiple lines of configuration commands between the start identifier and the end identifier, the start identifier and the end identifier form a configuration scenario. The !<mpls-te> appearing at a line below the !</ldp> is a start identifier of another configuration scenario, and similar to !<ldp>, there is also an end identifier !</ mpls-te > at the end of this another scenario. Furthermore, it can be seen in FIG. 5 that the exclamation mark (!) is taken as a separator between configuration scenarios in this example. However, in practice, the separator between configuration scenarios may also be a blank line or other specific identifiers, which is not limited herein.

In a process of obtaining the configuration scenario classification dataset C1, for each identified configuration scenario, a main-secondary command combination can be identified according to an indentation of each configuration command in the configuration scenario or other identifiers, and then the identified main-secondary command combination is stored a main-secondary command classification dataset C2. As shown by the text in left part of FIG. 5, the commands controller ce1_3/16 and out_index 23 belong to a same scenario, where the command controller ce1_3/16 is a main command and the command out_index 23 is a secondary command. It is noted that, the purpose of obtaining the classification datasets C1 and C2 is to detect whether the configuration command combinations in the configuration scenarios and in the main-secondary commands are abnormal without caring about the specific parameters in each configuration command. Therefore, extraction may be performed on each configuration command to obtain its corresponding command format, and the configuration commands forming each data item in the classification datasets C1 and C2 may be replaced with corresponding command formats. For example, the command format of controller ce1_3/16 is controller [ID], and the command format of out_index 23 is out_index [NUM]. During an extraction process of the command format, each command format may be stored in a command format classification dataset C3. The extraction method of the command format may include a regular expression and a configuration command grammar rule, which is not limited herein. For the extracted command format, the configuration anomaly detection apparatus classifies the identified parameters to obtain a command parameter classification dataset C₄. Since a command parameter is generally associated with a command format to which the command parameter belongs and a position of the command parameter in the command format to which the command parameter belongs, during generation of the command parameter classification dataset C₄, the configuration anomaly detection apparatus may consider the command format to which the command parameter belongs and the position of the command parameter in the command format. For example, the command format corresponding to ce1_3/16 is controller [ID] and two command parameters corresponding to the configuration command ip address X.X.X.X 255.255.255.255 are X.X.X.X and 255.255.255.255, where X.X.X.X is the first IP address in the configuration command ip address X.X.X.X 255.255.255.255, and 255.255.255.255 is the second IP address in the configuration command ip address X.X.X.X 255.255.255.255. In this case, X.X.X.X may be regarded as an item of a subclass ip address^{∗} IP of C4, and 255.255.255.255 may be regarded as an item of a subclass ip address IP ^{∗}of C4, where ^{∗} symbol indicates the position of the parameter.

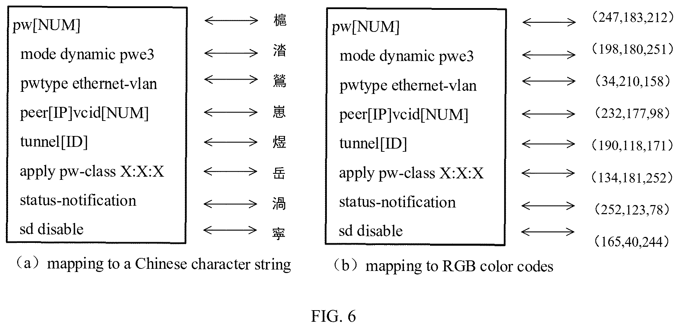

After obtaining the command formats, the configuration anomaly detection apparatus may perform a mapping operation on the command format by means of a dictionary, where the mapping dictionary may store, in the form of key value pair, a one-to-one mapping relationship between command format and element in a mapping set. Specifically, a configuration command is generally composed of a plurality of character strings of different lengths, digits, special characters, operators and spaces and the like, so as to be identified by the network equipment. Considering it is inconvenient to perform processing using an algorithm by directly taking the configuration command as an item of the item set during association analysis, and the execution efficiency of the algorithm will be affected, the present disclosure provides a configuration command mapping method by which configuration commands of different lengths and different forms can be mapped to codes of unified length and format, helping to construct a training set for the association analysis. The codes may be a character set consisting of Chinese characters, Japanese characters and Korean characters and the like or a combination thereof. Or RGB color set and letter or digital combinations of same length and the like are all code sets meeting requirements, which is not limited herein. FIG. 6 shows two examples of configuration command mapping, where in FIG. 6 (a), the command formats obtained by analysis of the configuration file are mapped to Chinese character strings; and in FIG. 6(b), the command formats are mapped to RGB color codes. The RGB color codes may be in the form of (247, 183, 212) and #FF0000 and the like, and FIG. 6 (b) presents the former form. In a mapping operation, the configuration anomaly detection apparatus may firstly determine whether a command format to be mapped is present in the mapping dictionary. If yes, the configuration anomaly detection apparatus may obtain mapping characters corresponding to the command format, for example, a corresponding Chinese character string or RGB color codes; or if no, the configuration anomaly detection apparatus may select a Chinese character string or RGB color codes which not present in the mapping dictionary and add the Chinese character string or RGB color codes to the mapping dictionary, and the configuration anomaly detection apparatus further may generate a mapping relationship between the command format and the Chinese character string or RGB color codes. Thus, the configuration anomaly detection apparatus may also obtain mapping characters corresponding to the command format. This mapping method may simplify construction of an association analysis training set. By mapping the command format to the dictionary, the mapping characters corresponding to the command format can be obtained and then a configuration scenario training set T₁ can be obtained by replacing the configuration command in C₁ with the mapping characters. Similarly, a main-secondary command training set T₂ can be obtained by replacing the configuration command in C₂ with the mapping characters. Then, the C3 is taken as a command format training set T₃, and C₄ is taken as a command parameter training set T₄. Herein, the mapping characters are characters corresponding to a preset command format.

By replacing the command formats in the data items of the configuration scenario type and the data items of the main-secondary command type with corresponding characters to participate in operations in the association analysis, the operations can be greatly simplified without affecting the association analysis result of the data items of the configuration scenario type and the data items of the main-secondary command type, thereby the efficiency of configuration anomaly detection of the network equipment can be improved.

At operation 303, association analysis is performed on data items belonging to a same preset type to obtain association analysis data.

Specifically, the association analysis data includes association evaluation parameters of each association rule.

In a specific example, in a case that the configuration anomaly detection apparatus obtains the configuration scenario training set T₁, the main-secondary command training set T₂, the command format training set T₃ and the command parameter training set T₄, the configuration anomaly detection apparatus may perform the association analysis on these training sets to calculate a support degree and a confidence level, the calculated support degree and confidence level are the association evaluation parameters. In practice, other parameters such as an enhancement degree for evaluating the association degree may also be calculated, or one or more of the support degree, the confidence level, the enhancement degree and other evaluation parameters may be calculated. These circumstances also fall within the scope of protection.

At operation 304, a detection result of configuration anomaly is obtained according to the association analysis data and a preset anomaly condition.

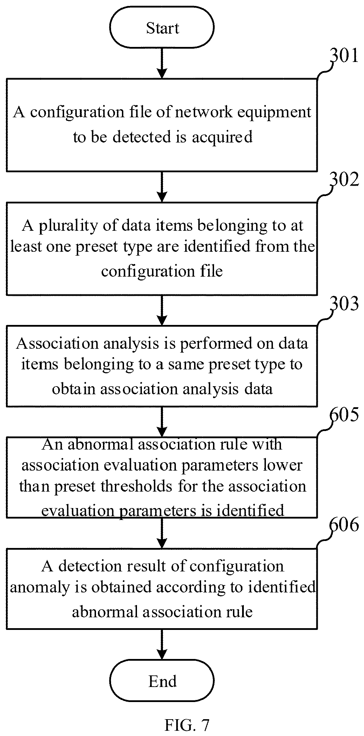

In a specific example, as shown in FIG. 7, operation 304 may include operations 605 and 606.

At operation 605, an abnormal association rule with association evaluation parameters lower than preset thresholds for the association evaluation parameters is identified.

In a specific example, when a training set includes multiple item sets, the preset anomaly condition is the preset thresholds for the association evaluation parameters. After association evaluation parameters of an association rule of an item set in this training set being calculated to be lower than the preset thresholds for the association evaluation parameters, the configuration anomaly detection apparatus takes the association rule as an abnormal association rule. If the association evaluation parameters herein are a support degree and a confidence level, and the training set T₁ includes item sets X and Y, when the configuration anomaly detection apparatus calculates that the support degree of the item set X is greater than a preset threshold for the support degree of the item set X, the item set X is an normal item set. Furthermore, the configuration anomaly detection apparatus also calculates that the support degree of the association rule *X* → *Y* is 0.3 which is smaller than a preset threshold 0.5 for the support degree of the association rule *X → Y ,* and the confidence level of the association rule *X* → *Y* is 0.4 which is smaller than a preset threshold 0.7 for the confidence level of the association rule *X* → *Y*, in this case, the configuration anomaly detection apparatus identifies the abnormal association rule *X* → *Y*.

At operation 606, a detection result of configuration anomaly is obtained according to identified abnormal association rule.

In a specific example, in a case that the training set T₁ includes items sets X and Y, and the support degree of the item set X is greater than a preset threshold for the support degree of the item set X, i.e. the item set X is a non-abnormal item set, further, the configuration anomaly detection apparatus identifies that the association rule *X* → *Y* is an abnormal association rule. In this case, since the item set X is an item set without configuration anomaly, the configuration anomaly detection apparatus detects that the item set Y is an item set with configuration anomaly. It is noted that, in practice, when the item set X is an item set without configuration anomaly, as long as an association evaluation parameter of the association rule *X* → *Y* is calculated to not meet the preset threshold for the association evaluation parameter, for example, the support degree of the association rule *X* → *Y* does not meet the preset threshold for the support degree, even if the confidence level of the association rule is higher than the corresponding preset threshold, the configuration anomaly detection apparatus determines this association rule *X* → *Y* as an abnormal association rule, and thus derives that the item set Y is an item set with configuration anomaly. Further, in practice, the configuration anomaly detection apparatus may perform association analysis on one training set therein, for example, on the configuration scenario training set T₁, or on a plurality of training sets, which is not limited herein.

In a specific example, it is assumed that a training set includes a plurality of item sets. Taking the training set T₁ as an example, the training set T₁ includes item sets X and Y. When the configuration anomaly detection apparatus detects that the support degree of the item set X is lower than the preset threshold for the support degree of the item set X, the configuration anomaly detection apparatus determines that the item set X is an item set with configuration anomaly. In this case, it is believed that the support degree of the association rule *X* → *Y* is lower than the preset threshold for the support degree of the association rule *X → Y*. In spite of the above, the confidence level of the association rule *X* → *Y* may not be lower than the preset threshold for the confidence level of the association rule *X* → *Y*. For example, the support degree of the item set X is 0.4 which is lower than the preset threshold 0.5, and the support degree of the association rule *X* → *Y* is 0.1 which is lower than the preset threshold 0.125 for the support degree of the association rule *X* → *Y*, whereas the confidence level of the association rule *X* → *Y* is 0.25 which is equal to the preset threshold 0.25 for the support degree of the association rule *X* → *Y.* In this case, the configuration anomaly detection apparatus may not determine that the association rule *X* → *Y* is an abnormal association rule, but only detect that the item set X is an item set with configuration anomaly.

In a specific example, after detecting that the item set Z in the training set T₃ is an item set with configuration anomaly, the configuration anomaly detection apparatus may process the item set Z to obtain configuration commands corresponding to the item set Z and present the configuration commands to the operation and maintenance personnel, such that the operation and maintenance personnel can label or modify the configuration commands corresponding to the item set Z with configuration anomaly. In practice, the configuration commands are not limited to being presented to the operation and maintenance personnel, that is, the configuration commands of the abnormal item set may be utilized based on actual situations, which is not limited herein. The training set T₄ is similar to the training set T₃ and will not be repeated herein. For the training sets T₁ and T₂, taking T₁ as an example, when the configuration scenario training set T₁ is obtained by replacing the configuration commands in C₁ with the mapping characters, the configuration anomaly detection apparatus cannot directly obtain, after detecting that T₁ includes an item set with configuration anomaly, the configuration commands corresponding to the item set with configuration anomaly but needs to perform inverse mapping on the item set with configuration anomaly to obtain the corresponding configuration commands. T₂ is similar to T₁ and will not be repeated herein.

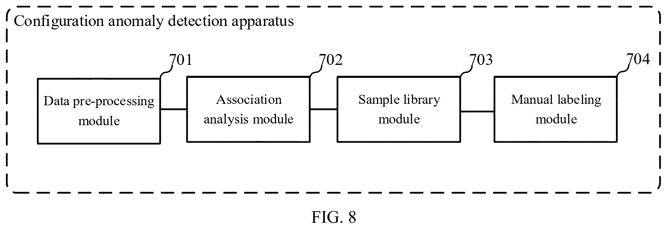

In a specific example, the configuration anomaly detection apparatus is composed of four modules, which are a data pre-processing module 701, an association analysis module 702, a sample library module 703 and a manual labeling module 704 as shown in FIG. 8. The data pre-processing module 701 is configured to classify configuration data collected and form training sets directly usable for association analysis. The association analysis module 702 is configured to perform association analysis on each training set and find out an item set with configuration anomaly in the training set and configuration commands corresponding to the item set with configuration anomaly. The sample library module 703 is configured to store manually-labeled data and assist the association analysis module 702 in performing automatic screening and automatic labeling of the configuration anomalies, that is, screening out the configuration commands and labeling corresponding to the item set with configuration anomaly. The sample library module 703 can remove a false configuration anomaly in the association analysis result and label a true configuration anomaly which has been found, thereby the accuracy of configuration anomaly detection can be further improved and the workload of the manual labeling can be reduced. The manual labeling module 704 is configured to provide a visual interface for displaying a result of configuration anomaly detection and a labeling function such that the operation and maintenance personnel can confirm the result of configuration anomaly detection. Furthermore, the manual labeling module 704 is further configured to store the labeling into the sample library module 703. It shall be noted that in this example, various modules involved in the configuration anomaly detection apparatus are all logical modules. In practice, a logical unit may be a physical unit, or a part of a physical unit, or a combination of a plurality of physical units, but it does not indicate the presence of other units.

In this embodiment, the configuration anomaly detection apparatus acquires a configuration file of network equipment to be detected, and identifies a plurality of data items belonging to at least one preset type from the configuration file; and the configuration anomaly detection apparatus performs association analysis on data items belonging to a same type to obtain association analysis data and finally obtains a detection result of configuration anomaly according to the association analysis data and a preset anomaly condition. The method for detecting configuration anomaly provided by this embodiment achieves a quick detection of a configuration anomaly of network equipment based on association analysis. Compared with existing manual patrol inspection method, the method according to the present disclosure can improve the detection efficiency of configuration anomalies of network equipment and can save labor and time costs.

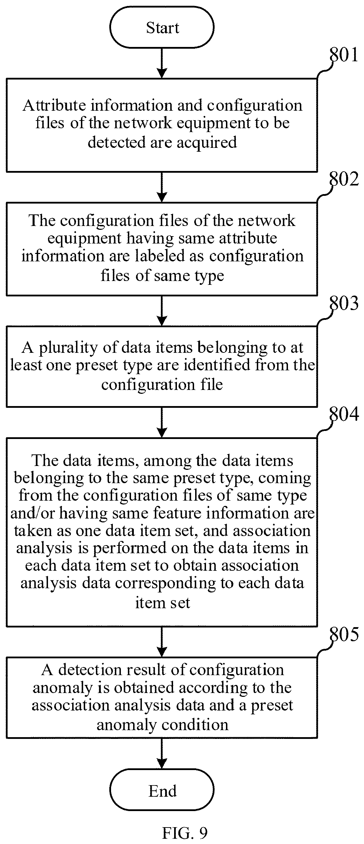

A second embodiment of the present disclosure relates to a method for detecting configuration anomaly. In this embodiment, before performing association analysis on the data items belonging to a same preset type to obtain association analysis data, the configuration anomaly detection apparatus acquires attribute information of each network equipment to be detected and labels the configuration files of the network equipment having same attribute information as configuration files of same type. Then, the configuration anomaly detection apparatus takes data items coming from the configuration files of same type and/or having same feature information in the data items belonging to the same preset type as one data item set, and performs association analysis on the data items in each data item set to obtain association analysis data corresponding to each data item set. The implementation details of the method for detecting configuration anomaly of this embodiment will be described in detail below. The implementation details provided for easy understanding only are not necessarily required for implementation of the solution. The specific flow is as shown in FIG. 9 and includes the following operations.

At operation 801, attribute information and configuration files of the network equipment to be detected are acquired.

Specifically, the operation 801 is similar to operation 301 except that in addition to the configuration data of the network equipment, the configuration anomaly detection apparatus in this embodiment also acquires attribute information of the network equipment, for example, a type, a role and a network topological structure of the network equipment, where the type of the network equipment is a specific model of the equipment, the role of the network equipment is a role played by the equipment in the network, for example, access-layer equipment, convergence-layer equipment, core-layer equipment or the like.

In a specific example, the attribute information of the network equipment may be included in the configuration file, or be collected by the network management system or SDN controller as distinguished from the configuration files of the network equipment, which is not limited herein.

At operation 802, the configuration files of network equipment having same attribute information are labeled as configuration files of same type.

In a specific example, when there are two pieces of network equipment, the roles of which are access-layer equipment, the configuration files of the two pieces of network equipment are labeled as configuration files of same type.

At operation 803, a plurality of data items belonging to at least one preset type are identified from the configuration file. This operation is similar to the operation 302 and will not be repeated herein.

It shall be noted that, in this embodiment, the operation 802 is performed before the operation 803, but in practice, the operation 802 may be performed in parallel to operation 803 or after the operation 803, as long as the operation 802 is performed before operation 804.

At operation 804, the data items coming from the configuration files of same type and/or having same feature information in the data items belonging to the same preset type are taken as one data item set, and association analysis is performed on the data items in each data item set to obtain association analysis data corresponding to each data item set.

Specifically, each data item has feature information matching the preset type to which the data item belongs.

In a specific example, the configuration anomaly detection apparatus takes the data items coming from the configuration files of same type in the data items belonging to the same preset type as one data item set. It is assumed that configuration files of two pieces of network equipment both include data items of the configuration scenario type and the roles of the two pieces of network equipment both are access-layer equipment, that is, the configuration files of the two pieces of network equipment include data items coming from the configuration files of a same type. Thus, the configuration anomaly detection apparatus takes data items which are of the configuration scenario type and come from the configuration files of a same type as one data item set, and performs association analysis on the data items in the data item set to obtain association analysis data corresponding to each data item set.

In a specific example, the configuration anomaly detection apparatus takes the data items, among the data items belonging to the same preset type, having same feature information as one data item set. When the preset type is the configuration scenario type, the feature information matching the preset type to which the data items belong is name of configuration scenario. Thus, the configuration anomaly detection apparatus may take data items, among the data items of the configuration scenario type, having same scenario name as one data item set, and perform association analysis on this data item set to obtain association analysis data corresponding to this data item set. Compared with the association analysis performed on the data items belonging to the same preset type, this solution enables the configuration anomaly detection apparatus to have a more accurate association analysis result and thereby obtain a more reliable detection result of configuration anomaly.

In a specific example, the configuration anomaly detection apparatus takes the data items, among the data items belonging to the same preset type, coming from the configuration files of same type and having same feature information as one data item set. It is assumed that roles of two pieces of network equipment are access-layer equipment and the configuration files of the two pieces of network equipment include data items of the configuration scenario type, and that the names of configuration scenario of the data items included in the configuration files of the two pieces of network equipment are the same, in this case, the configuration anomaly detection apparatus may take the data items, among the data items of the configuration scenario type, coming from the configuration files of same type and having same name of configuration scenario as one data item set, and perform association analysis on the data items in each data item set to obtain association analysis data corresponding to each data item set.

At operation 805, a detection result of configuration anomaly is obtained according to the association analysis data and a preset anomaly condition. The operation 805 is similar to operation 304 and will not be repeated herein.

In this embodiment, after labeling the configuration files of a same preset type as those of same type, the configuration anomaly detection apparatus takes data items, among the data items belonging to the same preset type, coming from the configuration files of same type and/or having same feature information as one data item set, and performs association analysis on the data items in each data item set to obtain association analysis data corresponding to each data item set, and finally obtains a detection result of configuration anomaly according to the association analysis data and a preset anomaly condition. This embodiment can achieve configuration anomaly detections at different levels and in different granularities, which may include: whether there is a missing configuration in the configuration scenario, whether one or more configuration commands are over-configured, whether the cooperation of the main and secondary commands is correct, whether the command format is reasonable, whether the command parameters are correct or the like. In this way, the detection result of configuration anomaly can be more accurate.

In this embodiment, data items, among the data items belonging to the same preset type, coming from the configuration files of same type and/or having same feature information are taken as one data item set, and association analysis is performed on the data items in each data item set. Compared with performing association analysis on the data item set including all data items belonging to a same preset type, the method according to this embodiment can reduce interferences between the equipment of different roles in configuration mode, thus the calculation efficiency of the association analysis and the accuracy of the anomaly detection can be improved.

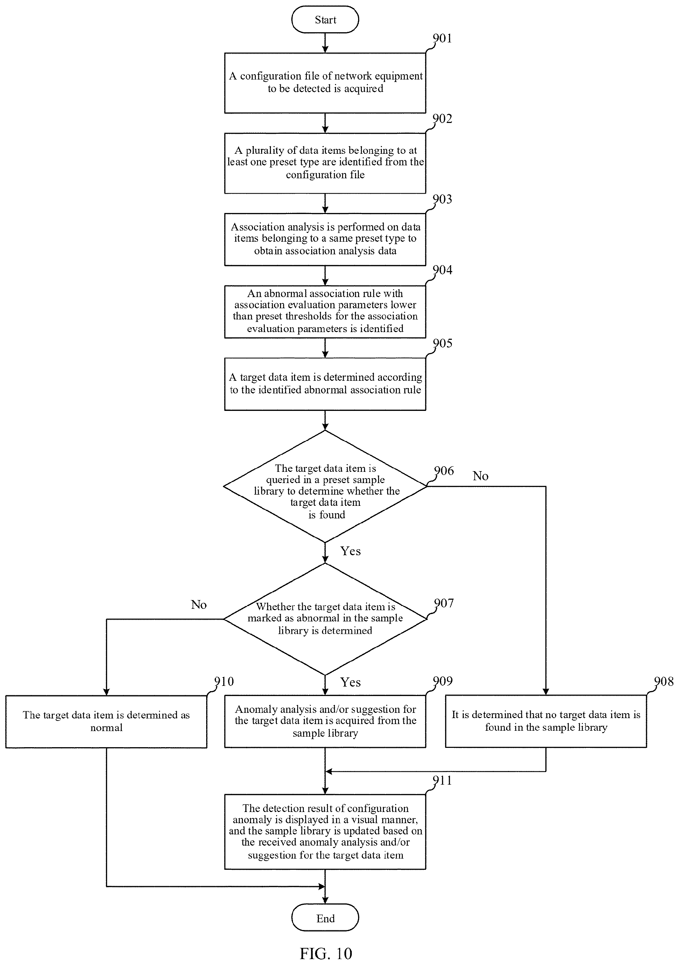

A third embodiment of the present disclosure relates to a method for detecting configuration anomaly. In this embodiment, after obtaining a detection result of configuration anomaly based on an identified association rule, the configuration anomaly detection apparatus may display the detection result of configuration anomaly in a visual way, and update the sample library based on received anomaly analysis and/or suggestion for a target data item. The implementation details of the method for detecting configuration anomaly according to this embodiment will be described in detail below. The implementation details provided for easy understanding only are not necessarily required for implementation of the solution. The specific flow is as shown in FIG. 10 and includes the following operations.

At operation 901, a configuration file of network equipment to be detected is acquired. This operation is similar to operation 301 and will not be repeated herein.

At operation 902, a plurality of data items belonging to at least one preset type are identified from the configuration file. This operation is similar to operation 302 and will not be repeated herein.

At operation 903, association analysis is performed on data items belonging to a same preset type to obtain association analysis data. This operation is similar to operation 303 and will not be repeated herein.

At operation 904, an abnormal association rule with association evaluation parameters lower than preset thresholds for the association evaluation parameters is identified. This operation is similar to operation 605 and will not be repeated herein.

At operation 905, a target data item is determined according to the identified abnormal association rule.

In a specific example, when the configuration anomaly detection apparatus identifies that the item set X in the training set T₁ is an item set with normal configuration, and that the association rule *X* → *Y* is an abnormal association rule, the configuration anomaly detection apparatus determines the item set Y as an n item set with abnormal configuration and determines the item set Y as a target data item.

At operation 906, the target data item is queried in a preset sample library to determine whether the target data item is found. If yes, operation 907 is performed; if no, operation 908 is performed.

In a specific example, it is assumed that the configuration anomaly detection apparatus is provided with a preset sample library, and the configuration anomaly detection apparatus may query the target data item in the sample library, for example, the configuration anomaly detection apparatus may obtain an item set with abnormal configuration from the configuration scenario training set T₁ and then queries the data items in this item set in the sample library. That is to say, in order to increase the query efficiency, the sample library can store mapped data items. The sample library can remove a false configuration anomaly in the association analysis result and label a true configuration anomaly which has been found, thereby the accuracy of configuration anomaly detection can be further improved and the workload of the manual labeling can be reduced.

At operation 907, whether the target data item is marked as abnormal in the sample library is determined. If yes, operation 909 is performed; if no, operation 910 is performed.

In a specific example, when the configuration anomaly detection apparatus finds an item set with abnormal configuration in the sample library, it further determines whether this item set is marked as abnormal in the sample library.

At operation 908, it is determined that no target data item is found in the sample library.

In specific example, when the configuration anomaly detection apparatus cannot find an item set with abnormal configuration in the sample library, it determines that the sample library does not include labeling data of this abnormal item set.

At operation 909, anomaly analysis and/or suggestion for the target data item is obtained from the sample library.

In a specific example, when the target data item is marked as abnormal in the sample library, the configuration anomaly detection apparatus can obtain the anomaly analysis and/or suggestion for the target data item from the sample library.

At operation 910, the target data item is determined as normal.

In a specific example, when an item set with abnormal configuration is marked as normal in the sample library, it indicates that this item set with abnormal configuration is a false anomaly and can be deleted from the detection result. With the sample library, further verification can be performed on the detection result of configuration anomaly. In this way, the accuracy of the detection result can be improved.

At operation 911, the detection result of configuration anomaly is displayed in a visual way, and the sample library is updated based on the received anomaly analysis and/or suggestion for the target data item.

In a specific example, the detection result of configuration anomaly includes the target data item marked as abnormal and the anomaly analysis and/or suggestion for the target data item being found in the sample library, and no target data item being found in the sample library. The configuration anomaly detection apparatus sends the detection result of configuration anomaly to a visual interface, and the visual interface may display configuration anomaly type, position of the configuration anomaly, modification suggestion and the like, which is not limited herein. Herein, the configuration anomaly type may include a configuration anomaly in configuration scenario, a configuration anomaly in main and secondary command, a configuration anomaly in command format, a configuration anomaly in command parameter and the like, which is not limited herein. Moreover, the visual interface can further provide a convenient interactive mode, for example, mouse ticking or the like, which is not limited herein. With this interactive mode, operation and maintenance personnel can label the configuration anomalies detected by the configuration anomaly detection apparatus, where the labeling content includes whether it is a false anomaly, a problem type, a risk level and the like, Furthermore, the operation and maintenance personnel can also record a cause for labeling the data item as a problem item, a modification suggestion and the like in a form of text input, which is not limited herein. It should be noted that, after a detection result is labeled by the operation and maintenance personnel, the labeled data is updated to the sample library to achieve continuous improvement of the labeled data in the sample library.

In this embodiment, a preset sample library is provided. With the sample library, further verification on whether the target data item currently detected is abnormal can be performed. In this way, the accuracy of the finally-obtained detection result of configuration anomaly can be improved, and anomaly analysis and/or suggestion can be provided for the data items determined as abnormal based on the records in the sample library.

Furthermore, the visualization of the detection result of configuration anomaly enables the operation and maintenance personnel to see the detection result of configuration anomaly intuitively. In addition, the sample library can be updated based on the anomaly analysis and/or suggestion from the operation and maintenance personnel for the abnormal data items. In this way, the sample library can be more and more perfect, and subsequent anomaly confirmation on the identified target data items based on the sample library can be more accurate, thereby the accuracy of the detection result of configuration anomaly finally obtained by this solution can be further improved.

The above division of the operations of the methods is used only for clear descriptions and the operations can be combined into one operation or some operations can be split into multiple operations in implementation, which shall fall within the scope of protection of the present disclosure as long as they include a same logical relationship. Unnecessary modifications added or unnecessary design introduced in an algorithm or flow shall fall in the scope of protection of the present disclosure as long as the core design of the algorithm and flow is not changed.

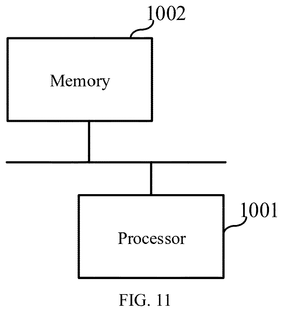

A fourth embodiment of the present disclosure relates to a server. As shown in FIG. 11, the server includes at least one processor 1001, and a memory 1002 in communication connection with the at least one processor. The memory 1002 stores instructions executable by the at least one processor 1001, when the instructions are executed by the at least one processor 1001, the at least one processor implements the above method for detecting configuration anomaly.

The memory 1002 and the processor 1001 are connected via a bus. The bus may include any number of inter-connected buses and bridges. The bus connects various circuits of the one or more processors 1001 and the memory 1002 together. The bus may also connect other various circuits such as peripheral devices, voltage regulators, power management circuits and the like together, which is well known in the art. Therefore, no further descriptions are made to them herein. An interface of the bus provides an interface between the bus and a transceiver. The transceiver may be one element or multiple elements, for example, a plurality of receivers and transmitters provided as a unit in communication with other apparatus on a transmission medium. Data processed by the processor 1001 is transmitted on a wireless medium through antennas, and further, the antenna receives data and sends the data to the processor 1001.

The processor 1001 is in charge of managing the buses and routine procedures and further providing various functions such as timing, peripheral interfaces, voltage regulation, power source management and other control functions. The memory 1002 is configured to store data used by the processor 1001 to perform operations.

A fifth embodiment of the present disclosure relates to a computer readable storage medium storing computer programs. When the computer programs are executed by a processor, the processor implements the above method embodiments.

Those skilled in the art should understand that all or part of the operations for implementing the above method embodiments may be completed by instructing relevant hardware through programs. The programs may be stored in one storage medium and include several instructions used to enable one device (e.g. single chip microcomputer and chip and the like) or processor to perform all or part of the operations for implementing the method of each embodiment. The above storage medium includes U disk, removable hard disk, Read Only Memory (ROM), Random Access Memory (RAM), magnetic diskette, or compact disk or other mediums capable of storing program codes.

Embodiments of the present disclosure provides a method for detecting configuration anomaly, a server and a storage medium, so as to achieve quick detection on configuration anomalies of network equipment. In this way, the detection efficiency can be improved, and labor and time costs for configuration anomaly detection of the network equipment can be saved.

Those skilled in the art may understand that the above embodiments are specific embodiments for implementing the present disclosure, and in practice, these embodiments may be changed in form or details without departing from the spirit and scope of the present disclosure.

## Claims

1. A method for detecting configuration anomaly, comprising:
acquiring a configuration file of network equipment to be detected;
identifying a plurality of data items belonging to at least one preset type from the configuration file;
performing association analysis on data items belonging to a same preset type to obtain association analysis data; and
obtaining a detection result of configuration anomaly according to the association analysis data and a preset anomaly condition.

2. The method for detecting configuration anomaly of claim 1, wherein a number of the network equipment to be detected is greater than 1; and the method further comprises:
acquiring attribute information of the network equipment to be detected; and
labeling the configuration files of network equipment having identical attribute information as configuration files of same type;
wherein performing association analysis on the data items belonging to the same preset type to obtain the association analysis data comprises: taking data items, among the data items belonging to the same preset type, coming from the configuration files of same type and/or having same feature information as one data item set, and performing association analysis on the data items in each data item set to obtain association analysis data corresponding to each data item set;
wherein each data item has feature information matching a preset type to which the data item belongs.

3. The method for detecting configuration anomaly of claim 1 or 2, wherein identifying the plurality of data items belonging to the at least one preset type from the configuration file comprises: analyzing the configuration file based on a hierarchical model, and identifying the plurality of data items belonging to the at least one preset type.

4. The method for detecting configuration anomaly of claim 1, wherein the association analysis data comprises association evaluation parameters of each association rule, and the preset anomaly condition comprises preset thresholds for the association evaluation parameters;
obtaining the detection result of configuration anomaly according to the association analysis data and the preset anomaly condition comprises:
identifying an abnormal association rule with association evaluation parameters lower than the preset thresholds for the association evaluation parameters; and
obtaining the detection result of configuration anomaly based on identified abnormal association rule.

5. The method for detecting configuration anomaly of claim 4, wherein obtaining the detection result of configuration anomaly based on the identified abnormal association rule comprises:
determining a target data item according to the identified abnormal association rule;
in response to the target data item being found in a preset sample library and the target data item being marked as normal, determining that the target data item is normal;
in response to the target data item being found in the preset sample library and the target data item being marked as abnormal, acquiring anomaly analysis and/or suggestion for the target data item from the preset sample library;
wherein the detection result of configuration anomaly comprises finding out the target data item marked as abnormal and the anomaly analysis and/or suggestion for the target data item in the sample library, finding no the target data item in the sample library.

6. The method for detecting configuration anomaly of claim 5, wherein after obtaining the detection result of configuration anomaly based on the identified abnormal association rule, the method further comprises:
displaying the detection result of configuration anomaly in a visual manner and updating the sample library based on received anomaly analysis and/or suggestion for the target data item.

7. The method for detecting configuration anomaly of claim 1, wherein acquiring the configuration file of the network equipment to be detected comprises: acquiring the configuration file from the network equipment to be detected through a network management system or software defined network (SDN) controller.

8. The method for detecting configuration anomaly of claim 1, wherein the preset type is one of following types: configuration scenario type, main and secondary command type, command format type and command parameter type.

9. The method for detecting configuration anomaly of claim 8, wherein a data item of the configuration scenario type comprises at least one data item of the main and secondary command type, and a data item of the main and secondary command type comprises at least one data item of the command format type;
in response to a data item of the configuration scenario type being identified, replacing, according to a correspondence between a preset command format and characters, data items of the command format type comprised in data items of the configuration scenario type with characters corresponding to the data items of the command format type, wherein a data item of the command format type is a command format; or
in response to a data item of the main and secondary command type being identified, replacing, according to a correspondence between a preset command format and characters, data items of the command format type comprised in data items of the main and secondary command type with characters corresponding to the data items of the command format type.

10. A server, comprising:
at least one processor; and,
a memory in communication connection with the least one processor; wherein,
the memory stores instructions executable by the at least one processor, when the instructions are executed by the at least one processor, the at least one processor implements the method for detecting configuration anomaly according to any one of claims 1 to 9.

11. A computer readable storage medium, storing computer programs, wherein when the computer programs are executed by a processor, the processor implements the method for detecting configuration anomaly according to any one of claims 1 to 9.
